(19) Europäisches Patentamt
European Patent Office
Office européen des brevets

(11) EP 4 682 992 A1

(12) EUROPEAN PATENT APPLICATION
published in accordance with Art. 153(4) EPC

(43) Date of publication:
**21.01.2026 Bulletin 2026/04**

(21) Application number: **23928439.1**

(22) Date of filing: **18.12.2023**

(51) International Patent Classification (IPC):
***H01M 4/62*** (2006.01) ***H01M 4/13*** (2010.01)

(52) Cooperative Patent Classification (CPC):
**H01M 4/13; H01M 4/62; H01M 10/0525; H01M 10/42;** Y02E 60/10

(86) International application number:
**PCT/CN2023/139532**

(87) International publication number:
**WO 2024/193135 (26.09.2024 Gazette 2024/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.03.2023 CN 202310258701**

(71) Applicant: **Ningde Amperex Technology Limited
Ningde City, 352100 (CN)**

(72) Inventor: **CHEN, Meifeng
Ningde, Fujian 352100 (CN)**

(74) Representative: **Kraus & Lederer PartGmbB
Thomas-Wimmer-Ring 15
80539 München (DE)**

# (54) SECONDARY BATTERY AND ELECTRONIC DEVICE

(57) This application provides a secondary battery and an electronic apparatus. The secondary battery includes a positive electrode plate, where the positive electrode plate includes a positive electrode current collector and a positive electrode film layer. The positive electrode film layer is disposed on at least one side of the positive electrode current collector, and the positive electrode film layer includes a positive electrode active material and organic particles provided on a surface of the positive electrode active material, the organic particles being configured to undergo a thermal polymerization reaction under a heat treatment condition to form an insulating layer covering at least a portion of the surface of the positive electrode active material. When the adhesion forces between the positive electrode film layer and the positive electrode current collector before and after the heat treatment, and the resistances of the positive electrode plate before and after the heat treatment satisfy suitable relationships, the secondary battery can have good safety performance and cycling performance.

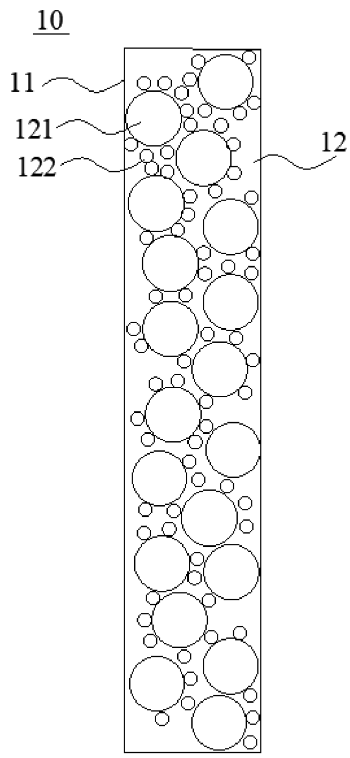


FIG. 1



Processed by Luminess, 75001 PARIS (FR)

## Description

### CROSS-REFERENCE TO RELATED APPLICATIONS

This application claims priority to Chinese patent application No. 202310258701.4, filed on March 17, 2023 and entitled "SECONDARY BATTERY AND ELECTRONIC APPARATUS", which is incorporated herein by reference in its entirety.

### TECHNICAL FIELD

This application relates to the field of battery technologies, and specifically, to a secondary battery and an electronic apparatus.

### BACKGROUND

With the development of battery technologies, performance of batteries gradually meets the general application requirements of various devices, leading to their widespread use in consumer electronic devices, power devices, energy storage devices, and other devices. Safety performance and cycling performance are two basic properties of batteries for their use in various devices. However, when batteries are subjected to thermal abuse, their safety performance and cycling performance decrease, thereby affecting the normal operation of the devices.

### SUMMARY

This application provides a secondary battery and an electronic apparatus. The secondary battery has good safety performance and cycling performance.

According to a first aspect, this application provides a secondary battery including a positive electrode plate, where the positive electrode plate includes a positive electrode current collector and a positive electrode film layer, where the positive electrode film layer is disposed on at least one side of the positive electrode current collector, and the positive electrode film layer includes a positive electrode active material and organic particles provided on a surface of the positive electrode active material, the organic particles being configured to undergo a thermal polymerization reaction under a heat treatment condition to form an insulating layer covering at least a portion of the surface of the positive electrode active material; before the heat treatment, an adhesion force between the positive electrode current collector and the positive electrode film layer is F1 N/m; and after the heat treatment, an adhesion force between the positive electrode current collector and the positive electrode film layer is of F2 N/m, wherein $1 \leq F2/F1 \leq 2$; and a resistance of the positive electrode plate before the heat treatment is $R_{before}$, where $R_{before}$ is 1 Ω to 3 Ω, a resistance of the positive electrode plate after the heat treatment is $R_{after}$, and $R_{after} - R_{before} \geq 1$ Ω; where the resistance of the positive electrode plate is obtained by testing at room temperature with a test area of 153.94 mm$^2$, a pressure of 3.5 tons, and a holding time of 50s.

In the secondary battery provided in this application, the organic particles can undergo a thermal polymerization reaction under a heat treatment condition to form an insulating layer covering at least a portion of the surface of the positive electrode active material. On the one hand, the insulating layer formed by the thermal polymerization reaction not only enhances the structural stability of the positive electrode active material, making it less susceptible to phase change at high temperatures, but also increases the resistance of the positive electrode plate and reduces the contact current during short circuit of the positive and negative electrode plates in the secondary battery, minimizing heat generation. On the other hand, the organic particles having undergone the thermal polymerization reaction help improve the adhesion force between the positive electrode film layer and the positive electrode current collector, and when F1 and F2 satisfy the above relationship, the risk of the positive electrode film layer falling off from the positive electrode current collector at high temperatures can be reduced. Therefore, the organic particles capable of undergoing the thermal polymerization reaction under the heat treatment condition can improve the safety performance of the secondary battery. In addition, in a room temperature environment, the probability of the organic particles undergoing the thermal polymerization reaction in the secondary battery is relatively small, reducing their influence on the electrochemical performance of the secondary battery. At high temperatures, the insulating layer formed by thermal polymerization reaction of the organic particles and covering at least a portion of the surface of the positive electrode active material can reduce the probability of the positive electrode active material coming into contact with the electrolyte at high temperatures. In addition, $R_{before}$ is a resistance of the positive electrode plate before heat treatment, $R_{before}$ ranges from 1 Ω to 3 Ω, and $R_{after}$ is a resistances after heat treatment, and $R_{after} - R_{before} \geq 1$ Ω. Thus, the risk of thermal runaway of the secondary battery is reduced at high temperatures, and the secondary battery still has a good cycling performance at high temperatures. Therefore, the secondary battery provided in this application has good safety performance and cycling performance.

According to any one of the foregoing embodiments of the first aspect of this application, $1.2 \leq F2/F1 \leq 1.6$. When

F2/F1 is in the above range, the risk of the positive electrode film layer falling off from the positive electrode current collector can be further reduced, further improving the safety performance of the secondary battery.

According to any one of the foregoing embodiments of the first aspect of this application, F1 is 10 to 30.

According to any one of the foregoing embodiments of the first aspect of this application, $R_{after} \geq 2.1\ \Omega$. When $R_{after}$ is in the above range, the occurrence of thermal runaway of the secondary battery can be further reduced, thereby further improving the safety performance of the secondary battery.

According to any one of the foregoing embodiments of the first aspect of this application, the organic particles include at least one monomer of formula I, formula II, or formula III;

and/or contain an oligomer formed from at least one monomer of formula I, formula II, or formula III;
where formula I, formula II and formula III are structured as follows:

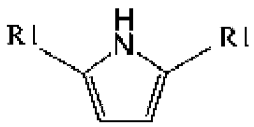

formula I

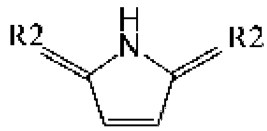

formula II

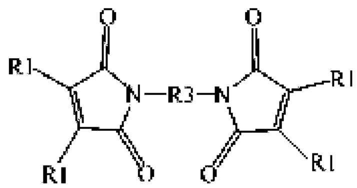

formula III

where R1 includes one or more of hydrogen, methyl, ethyl, amino, hydroxyl, and metal ion;
R2 includes one or more of imino group and phosphinidene group; and
R3 includes a C5-C6 cycloalkylene group, and/or a C5-C6 cycloalkylene group substituted with one or more of fluorine, chlorine, bromine, nitrogen, and phosphorus.

In the foregoing embodiments, the organic particles including the foregoing monomer and/or the oligomer formed by the monomer tend to undergo a thermal polymerization reaction at high temperatures to form an insulating layer covering the surface of the positive electrode active material. This can rapidly increase the resistance of the secondary battery at high temperatures and reduce the current during short circuit, thereby helping improve the safety performance of the secondary battery.

According to any one of the foregoing embodiments of the first aspect of this application, the monomer includes one or more of maleimide, bismaleimide, pyrrole, and 2,5-dimethylpyrrole.

According to any one of the foregoing embodiments of the first aspect of this application, the oligomer has a number average molecular weight of less than or equal to 2000.

According to any one of the foregoing embodiments of the first aspect of this application, the oligomer includes one or more of maleimide oligomer and bismaleimide oligomer.

According to any one of the foregoing embodiments of the first aspect of this application, m is a mass percentage of the organic particles in the positive electrode film layer, m ranges from 0.3% to 2%. When the mass percentage of the organic particles in the positive electrode film layer is in the above range, the resistance of the positive electrode plate after heat treatment can be further increased, thereby improving the safety performance of the secondary battery at high temperatures.

According to any one of the foregoing embodiments of the first aspect of this application, D is a thickness of the positive electrode film layer and m is a mass percentage of the organic particles in the positive electrode film layer, D and m satisfy at least one of the following characteristics:

(I) when the thickness of the positive electrode film layer satisfies $30\ \mu m \leq D \leq 100\ \mu m$, the mass percentage of the organic particles in the positive electrode film layer is $1\% \leq m \leq 2\%$; or
(II) when the thickness of the positive electrode film layer satisfies $100\ \mu m < D \leq 200\ \mu m$, the mass percentage of the organic particles in the positive electrode film layer is $0.3\% \leq m \leq 1\%$.

According to any one of the foregoing embodiments of the first aspect of this application, the heat treatment is to leave the positive electrode plate at a temperature of 120°C to 140°C for 60 min. When the temperature of the heat treatment is in the above range, the safety performance of the secondary battery at high temperatures can be improved, allowing its normal operation under high temperature conditions.

According to a second aspect, this application provides an electronic apparatus including the secondary battery according to any one of some embodiments of the first aspect of this application.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

## BRIEF DESCRIPTION OF DRAWINGS

To describe the technical solutions of some embodiments of this application more clearly, the following briefly describes the accompanying drawings for describing some embodiments of this application. Apparently, the accompanying drawings in the following descriptions show only some embodiments of this application, and a person of ordinary skill in the art may still derive other drawings from these accompanying drawings without creative efforts.

FIG. 1 is a schematic structural cross-sectional view of a positive electrode plate according to some embodiments of this application.

Description of reference signs:

10. positive electrode plate, 11. positive electrode current collector, 12. positive electrode film layer, 121. positive electrode active material, and 122. organic particles.

## DESCRIPTION OF EMBODIMENTS

The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "have", and any other variations thereof in the specification and claims of this application are intended to cover non-exclusive inclusions.

In this specification, reference to "embodiment" means that specific features, structures or characteristics described with reference to an embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that some embodiments described herein may be combined with other embodiments.

In the description of some embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of some embodiments of this application, unless otherwise stated, "above" and "below" mean inclusion of the number itself, "more types" in "one or more types" means at least two types, and "a plurality" means two or more.

Groupings of alternative elements or embodiments disclosed herein should not be construed as limitations. Each member of a group can be individually adopted and separately claimed for protection, or can be adopted and claimed for protection in any combination with other members of the group or other elements found herein. It is anticipated that one or more members of a group can be included in or deleted from the group for reasons of convenience and/or patentability. When any such inclusion or deletion occurs, the specification is hereby viewed as containing the group as altered and thus satisfying the written description of the entire Markush group as used in the claims.

It is apparent to those skilled in the art that various modifications and changes can be made in this application without departing from the protection scope of this application. Therefore, this application is intended to cover the modifications and changes of this application that fall within the scope of the corresponding claims (claimed scope) and their equivalents. It should be noted that the implementations provided in some embodiments of this application can be combined with each other where not contradictory.

For easy understanding of some embodiments of this application, the problems existing in the related art are first specifically described in this application before the protection scope of some embodiments of this application are described.

When a secondary battery is in use or exposed to a high temperature environment, its internal temperature rises. When a certain temperature is reached, the CEI film of the positive electrode plate will undergo decomposition and irreversible phase change, and also release heat and oxygen. The resulting oxygen is very active and will decompose the electrolyte in contact, affecting the cycling performance of the secondary battery. Moreover, the decomposition of the electrolyte will further increase heat and gas generation, and the internal temperature of the secondary battery will further increase, causing shrinkage of the separator and swelling of the positive electrode active material. As a result, the positive electrode film layer falls off from the current collector due to the reduced adhesion force between them. This will trigger thermal runaway, resulting in safety risks of combustion or even explosion of the secondary battery.

In view of this, this application provides a secondary battery and an electronic apparatus, where the secondary battery has good safety performance and cycling performance.

In this application, the secondary battery may include a lithium secondary battery. For example, the lithium secondary battery may include but is not limited to a lithium metal secondary battery, a lithium-ion secondary battery, a lithium polymer secondary battery, or a lithium-ion polymer secondary battery.

## Secondary battery

Referring to FIG. 1, this application provides a secondary battery including a positive electrode plate 10. The positive electrode plate 10 includes a positive electrode current collector 11 and a positive electrode film layer 12. The positive electrode film layer 12 is disposed on at least one side of the positive electrode current collector 11, and the positive electrode film layer 12 includes a positive electrode active material 121 and organic particles 122 provided on a surface of the positive electrode active material 121, the organic particles 122 being configured to undergo a thermal polymerization reaction under a heat treatment condition to form an insulating layer covering at least a portion of the surface of the positive electrode active material 121. Before the heat treatment,an adhesion force between the positive electrode current collector 11 and the positive electrode film layer 12 is F1 N/m and after the heat treatment, an adhesion force between the positive electrode current collector 11 and the positive electrode film layer 12 is F2 N/m, wherein $1 \leq F2/F1 \leq 2$. A resistance of the positive electrode plate 10 before the heat treatment is $R_{before}$, where $R_{before}$ is 1 Ω to 3 Ω, a resistance of the positive electrode plate 10 after the heat treatment is $R_{after}$, and $R_{after} - R_{before} \geq 1\ \Omega$; where the resistance of the positive electrode plate 10 is obtained by testing at room temperature with a test area of 153.94 $mm^2$, a pressure of 3.5 tons, and a holding time of 50s.

In this application, the positive electrode plate 10 has two opposite sides, so the positive electrode film layer 12 may be disposed on one of the two sides of the positive electrode current collector 11 or the positive electrode film layer 12 may be disposed on each of the two sides of the positive electrode current collector 11, which is not specifically limited in some embodiments of this application.

Furthermore, in this application, heat treatment refers to heating, maintaining temperature for, and cooling the fabricated positive electrode plate 10 to change the organizational structure of the surface or interior of the positive electrode film layer 12.

In this application, the adhesion force between the positive electrode current collector 11 and the positive electrode film layer 12 may be tested using the methods or instruments known in the art. For example, the adhesion force between the positive electrode current collector 11 and the positive electrode film layer 12 is tested using a Gotech tensile machine according to a 90° method. The test method is as follows:

The part of the electrode plate in the secondary battery coated with the positive electrode film layer 12 is made into a strip, and a part of the electrode plate is adhered to the steel plate by double-sided adhesive from one end of the electrode plate along the length direction. Then the steel plate is fixed in the corresponding position of the Gotech tensile machine, and the electrode plate not adhered to the steel plate is pulled up, and the electrode plate is put into the grip directly or through a connector for clamping. When the tensile force at the grip opening is greater than 0 kgf and smaller than 0.02 kgf, the Gotech tensile machine can start testing. The finally measured average tensile force is recorded as the adhesion force between the positive electrode film layer 12 and the positive electrode current collector 11.

In this application, the resistance of the positive electrode plate 10 can be tested using a method or instrument well known in the art. For example, the resistance of the positive electrode plate 10 is tested using a BER1200 film resistance tester, which specifically includes the following steps.

Resistance test for the positive electrode plate 10 before heat treatment:

(1) The secondary battery is charged at a constant current of 0.5C to a full-charge voltage, and then charged at a constant full-charge voltage to a current of 0.025C (cut-off current) to make the secondary battery enter a full-charge state.
(2) The secondary battery is disassembled to obtain a positive electrode plate 10.
(3) The positive electrode plate 10 is placed in an environment with a humidity of 5% to 15%, left standing for 30 min, and then sealed and transferred for the test.

(4) The resistance of the positive electrode plate 10 at 25°C is tested using a BER1200 film resistance tester. At least 15 different points are tested, with adjacent test points spaced at an interval of 2 mm to 3 mm. The resistances of all test points are recorded, and an average value of these test points is calculated and used as a resistance $R_{before}$ of the positive electrode plate 10 before subjected to heat treatment. The test parameters include an indenter area of 153.94 $mm^2$(in this application, the test area is the same as the indenter area), a pressure of 3.5 tons, and a holding time of 50s.

Resistance test for the positive electrode plate 10 after heat treatment:

(1) The secondary battery is charged at a constant current of 0.5C to a full-charge voltage, and then charged at a constant full-charge voltage to a current of 0.025C (cut-off current) to make the secondary battery enter a full-charge state.
(2) The secondary battery is disassembled to obtain a positive electrode plate 10.
(3) The positive electrode plate 10 is placed in an oven at 140°C for 60 min, then cooled down to 25°C, and sealed and transferred for the test.
(4) The resistance of the positive electrode plate 10 at 25°C is tested using a BER1200 film resistance tester. At least 15 different points are tested, with adjacent test points spaced at an interval of 2 mm to 3 mm. The resistances of all test points are recorded, and an average value of these test points is calculated and used as a resistance $R_{after}$ of the positive electrode plate 10 after subjected to heat treatment. The test parameters include an indenter area of 153.94 $mm^2$, a pressure of 3.5 tons, and a holding time of 50s.

In the secondary battery provided in this application, the organic particles 122 can undergo a thermal polymerization reaction under a heat treatment condition to form an insulating layer covering at least a portion of the surface of the positive electrode active material 121. On the one hand, the insulating layer formed by the thermal polymerization reaction not only enhances the structural stability of the positive electrode active material 121, making it less susceptible to phase change at high temperatures, but also increases the resistance of the positive electrode plate 10 and reduces the contact current during short circuit of the positive and negative electrode plates in the secondary battery, minimizing heat generation. On the other hand, the organic particles 122 having undergone the thermal polymerization reaction help improve the adhesion force between the positive electrode film layer 12 and the positive electrode current collector 11, and when F1 and F2 satisfy the above relationship, the risk of the positive electrode film layer 12 falling off from the positive electrode current collector 11 at high temperatures can be reduced. Therefore, the organic particles 122 capable of undergoing the thermal polymerization reaction under the heat treatment condition can improve the safety performance of the secondary battery. In addition, in a room temperature environment, the probability of the organic particles 122 undergoing the thermal polymerization reaction in the secondary battery is relatively small, reducing their influence on the electrochemical performance of the secondary battery. At high temperatures, the insulating layer formed by the thermal polymerization reaction of the organic particles 122 and covering at least a portion of the surface of the positive electrode active material 121 can reduce the probability of the positive electrode active material 121 coming into contact with the electrolyte at high temperatures. In addition, a resistance of the positive electrode plate before the heat treatment is $R_{before}$, $R_{before}$ ranges from 1 Ω to 3 Ω,, and a resistance of the positive electrode plate after the heat treatment is $R_{after}$, and $R_{after} - R_{before} \geq 1\ \Omega$. Thus, the risk of thermal runaway of the secondary battery is reduced at high temperatures, and the secondary battery still has a good cycling performance at high temperatures. Therefore, the secondary battery provided in this application has good safety performance and cycling performance.

In some embodiments of this application, the positive electrode film layer 12 further includes a binder. The binder enhances binding between particles of the positive electrode active material 121, as well as binding between the positive electrode active material 121 and the positive electrode current collector 11.

For example, the binder may include one or more selected from polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(1,1-difluoroethylene), polyethylene, polypropylene, styrene-butadiene rubber, acrylic styrene-butadiene rubber, epoxy resin, and nylon.

In these embodiments, when the organic particles 122 undergo a thermal polymerization reaction in the secondary battery at high temperatures, they may form hydrogen bonds with the polymeric material of the binder. This can improve the adhesion force between the positive electrode film layer 12 and the positive electrode current collector 11 at high temperatures, thereby reducing the risk of the positive electrode film layer 12 falling off from the positive electrode current collector 11 at high temperatures.

In some embodiments of this application, $1.2 \leq F2/F1 \leq 1.6$. When F2/F1 is in the above range, the risk of the positive electrode film layer 12 falling off from the positive electrode current collector 11 can be further reduced, further improving the safety performance of the secondary battery.

In some embodiments of this application, F1 is 10 to 30.

In some embodiments of this application, $R_{after} \geq 2.1\ \Omega$. When $R_{after}$ is in the above range, the occurrence of thermal runaway of the secondary battery can be further reduced, thereby further improving the safety performance of the secondary battery.

In some embodiments of this application, the positive electrode current collector 11 may be a metal foil or a porous metal plate, for example, a foil or porous plate of metals such as aluminum, copper, nickel, titanium, iron, or alloys thereof. In some specific embodiments of this application, the positive electrode current collector 11 is aluminum foil.

In these embodiments, the suitable positive electrode active material 121 can contribute to improving the electrochemical performance of the secondary battery, such as the cycling performance and energy density.

In some embodiments of this application, the positive electrode active material 121 may include but is not limited to at least one of an olivine-structured material such as lithium iron manganese phosphate, lithium iron phosphate, or lithium manganese phosphate, a ternary structural material such as NCM811, NCM622, NCM523, or NCM333, a lithium cobalt oxide material, a lithium manganate material, or other metal oxides capable of intercalating and deintercalating lithium.

In some embodiments of this application, the organic particles 122 include at least one monomer of formula I, formula II, or formula III; and/or contain an oligomer formed from at least one monomer of formula I, formula II, or formula III; where formula I, formula II, and formula III are structured as follows:

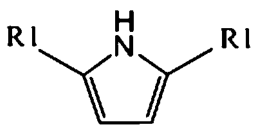

formula I

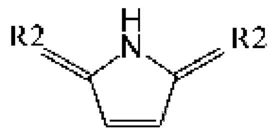

formula II

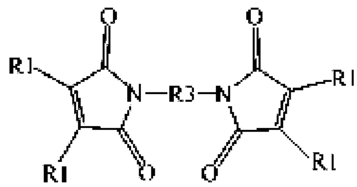

formula III

where R1 includes one or more of hydrogen, methyl, ethyl, amino, hydroxyl, and metal ion; R2 includes one or more of imino group and phosphinidene group; and R3 includes a C5-C6 cycloalkylene group, and/or a C5-C6 cycloalkylene group substituted with one or more of fluorine, chlorine, bromine, nitrogen, and phosphorus.

In the foregoing embodiments, the organic particles 122 including the foregoing thermally polymerizable monomer and/or the oligomer formed by the monomer tend to undergo a thermal polymerization reaction at high temperatures to form an insulating layer covering the surface of the positive electrode active material 121. This can rapidly increase the resistance of the secondary battery at high temperatures and reduce the current during short circuit, thereby helping improve the safety performance of the secondary battery.

In some embodiments of this application, the metal ion in R1 may include one or more of sodium, potassium, and magnesium.

In some embodiments of this application, the monomer includes one or more of maleimide, bismaleimide, pyrrole, and 2,5-dimethylpyrrole.

In some embodiments of this application, the oligomer has a number average molecular weight of less than or equal to 2000.

In some embodiments of this application, the oligomer includes at least one of maleimide oligomer or bismaleimide oligomer.

In these embodiments, when the mass percentage of the organic particles 122 in the positive electrode film layer 12 is in the above range, the resistance of the positive electrode plate 10 after heat treatment can be further increased, allowing the secondary battery to have a good safety performance at high temperatures.

In some embodiments of this application, the mass percentage of the organic particles 122 in the positive electrode film layer 12 is m, m ranges from 0.3% to 2%. When the mass percentage of the organic particles 122 in the positive electrode film layer 12 is in the above range, the resistance of the positive electrode plate 10 after heat treatment can be further increased, thereby improving the safety performance of the secondary battery at high temperatures.

In this application, the mass percentage of the organic particles 122 in the positive electrode film layer 12 may be

determined using the methods or instruments known in the art. For example, a centrifuge may be employed to separate the organic particles 122. The specific method is as follows:

The positive electrode plate 10 is removed from the secondary battery in a dry environment with a humidity of less than 2% at about 25°C. The positive electrode plate 10 is soaked in a solvent to remove the film layer, and the film layer is uniformly dispersed in an NMP solvent through a disperser to obtain a slurry with a solid content of 30%. Then the slurry is centrifuged using a centrifuge to obtain the organic particles 122 in the film layer. Finally, the organic particles 122 are dried at 85°C and weighed to calculate the mass percentage.

For example, the mass percentage of the organic particles 122 in the positive electrode film layer 12 may be, but is not limited to, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9%, 2%, or a range defined by any two of these values. For example, the value range of the mass percentage of the organic particles 122 in the positive electrode film layer 12 may be, but is not limited to, 0.4% to 1.9%, 0.5% to 1.8%, 0.6% to 1.7%, 0.7% to 1.6%, 0.8% to 1.5%, and 0.9% to 1.4%.

In addition, the mass percentage of the organic particles 122 in the positive electrode film layer 12 and the thickness of the positive electrode film layer 12 satisfy a certain relationship, which helps improve the safety performance of the secondary battery and facilitates normal operation of the secondary battery at high temperatures.

In some embodiments of this application, when D is the thickness of the positive electrode film layer 12, D satisfies $30\ \mu m \leq D \leq 100\ \mu m$, m is the mass percentage of the organic particles 122 in the positive electrode film layer 12, m satisfies $1\% \leq m \leq 2\%$.

In some embodiments of this application, $100\ \mu m < D \leq 200\ \mu m$, and $0.3\% \leq m \leq 1\%$.

In this application, the thickness of the positive electrode film layer 12 has a meaning well known in the art and can be tested using methods or instruments known in the art. For example, the thickness of the positive electrode film layer 12 may be tested using a scanning electron microscopy (SEM). The test method is as follows:

In an environment of about 25°C, the positive electrode plate 10 is removed from the secondary battery, and the residual electrolyte on the surface of the positive electrode plate 10 is wiped off with dust-free paper. Then the positive electrode plate 10 is cut under a plasma to obtain its cross section. The cross section of the positive electrode plate 10 is observed under a SEM, and the thickness of the one-sided positive electrode film layer 12 is tested. At least 15 different points are tested, with adjacent test points spaced at an interval of 2 mm to 3 mm, thicknesses of all the test points are recorded, and the average value of these test points is calculated and used as the thickness D of the positive electrode film layer 12.

In some embodiments of this application, the positive electrode film layer 12 further includes a conductive agent, where the conductive agent includes one or more of a carbon-based material, a metal-based material, a conductive polymer, and a mixture thereof.

For example, the carbon-based material includes one or more of carbon black, acetylene black, Ketjen black, carbon fibers, and carbon nanotubes. The metal-based material includes one or more of metal powder, metal fiber, copper, nickel, aluminum, and silver. The conductive polymer includes a polyphenylene derivative.

In some embodiments of this application, the heat treatment is to leave the positive electrode plate 10 at a temperature of 120°C to 140°C for 60 min. When the temperature of the heat treatment is in the above range, the safety performance of the secondary battery at high temperatures can be improved, allowing its normal operation under high temperature conditions.

The positive electrode plate 10 of this application can be prepared according to conventional methods in the art. For example, the positive electrode active material 121, the organic particles 122, the conductive agent, and the binder are dispersed in N-methylpyrrolidone (NMP) to form a uniform positive electrode slurry; and the positive electrode slurry is applied onto the positive electrode current collector 11, followed by drying, cold pressing, cutting, slitting, and re-drying, to obtain a positive electrode plate 10.

A secondary battery known in the art typically further includes a negative electrode plate and a separator, where the negative electrode plate includes a negative electrode current collector and a negative electrode film layer disposed on at least one side of the negative electrode current collector, and the separator is disposed between the negative electrode plate and the positive electrode plate 10.

It can be understood that the negative electrode plate may be provided with the negative electrode film layer on one surface of the negative electrode current collector, or may be provided with the negative electrode film layer on both surfaces of the negative electrode current collector, which is not particularly limited in some embodiments of this application.

In some embodiments of this application, the negative electrode current collector may be a metal foil or a porous metal plate, for example, a foil or porous plate of metals such as copper, nickel, titanium, iron, or alloys thereof. In some specific embodiments of this application, the negative electrode current collector is copper foil.

In some embodiments of this application, the negative electrode film layer includes a negative electrode active material, where the negative electrode active material may include one or more of silicon, a silicon-oxygen compound ($SiO_x$, $0 < x \leq 2$), a silicon alloy, a silicon-carbon composite, graphite, mesocarbon microbead (MCMB), hard carbon, soft

carbon, a Li-Sn alloy, a Li-Sn-O alloy, Sn, SnO, $SnO_2$, spinel-structure lithium titanate $Li_4Ti_5O_{12}$, a Li-Al alloy, and metallic lithium. Through use of the materials described above, the energy density of the secondary battery can be improved.

In some embodiments of this application, the negative electrode film layer further includes a binder, where the binder may include one or more of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments of this application, the negative electrode film layer further includes a conductive agent, where the conductive agent may include one or more of superconducting carbon, acetylene black, carbon black, Ketjen black, carbon dots, carbon nanotubes, graphene, and carbon nanofibers.

In some embodiments of this application, the negative electrode film layer may further include other promoters such as a thickener (for example, sodium carboxymethyl cellulose (CMC-Na)).

In addition, the negative electrode plate is not limited to the above materials, and other well-known materials that can be utilized as the negative electrode active material, conductive agent, binder, and thickener can also be used.

The negative electrode plate of this application can be prepared according to conventional methods in the art. For example, the negative electrode active material, conductive agent, binder, and thickener are dispersed in a solvent which may be N-methylpyrrolidone (NMP) or deionized water, to form a uniform negative electrode slurry; and the negative electrode slurry is applied to the negative electrode current collector, followed by drying and cold pressing, to obtain a negative electrode plate.

In some embodiments of this application, the separator may be polyethylene, polypropylene, polyvinylidene fluoride, or a multilayer composite film thereof.

In some embodiments of this application, the separator is a single-layer separator or a multilayer separator.

Some embodiments of this application do not specifically limit the form or thickness of the separator. The separator is prepared according to a method that is well known in the art for preparing the separator that can be used in secondary batteries.

In addition, the secondary battery typically further includes an electrolyte. The electrolyte is a carrier for ion transport and can conduct ions between the positive electrode plate 10 and the negative electrode plate, ensuring good cycling performance and other advantages for the secondary battery.

In this application, the electrolyte is not specifically limited, and may be an electrolyte known in the art. For example, the electrolyte includes an organic solvent and an electrolytic salt, where the organic solvent may include one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methylmethyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfone methane (MSM), ethyl methyl sulfone (EMS), and diethyl sulfone (ESE).

The electrolytic salt may include one or more of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl)imide (LiFSI), lithium bistrifluoromethanesulfonimide (LiTFSI), lithium trifluoromethanesulfonate (LiTFS), lithium difluoro(oxalato)borate (LiDFOB), lithium dioxalate borate (LiBOB), lithium difluorophosphate ($LiPO_2F_2$), lithium difluorodioxalate phosphate (LiDFOP), and lithium tetrafluoro oxalato phosphate (LiTFOP).

The electrolyte may be prepared using the conventional methods in the art. For example, the organic solvent, the electrolytic salt, and the optional additives can be mixed well to obtain the electrolyte, where the order of adding the materials is not particularly limited.

The positive electrode plate 10, the separator, and the negative electrode plate are sequentially stacked so that the separator is located between the positive electrode plate 10 and the negative electrode plate. Then the resulting stack is wound to obtain an electrode assembly. The electrode assembly is placed into a shell. Then electrolyte is injected, and processes such as vacuum packaging, standing, formation, and shaping are performed to obtain a secondary battery.

In some embodiments of this application, the shell may include a hard shell or a flexible shell. For example, a material of the hard shell may include metal. A material of the flexible shell may include a metal-plastic film, such as an aluminum-plastic film or a steel-plastic film.

## Electronic apparatus

A second aspect of this application provides an electronic apparatus including the secondary battery according to the first aspect of this application. The secondary battery provided in this application has good safety performance and cycling performance, so the electronic apparatus provided in this application also has good safety performance and cycling performance.

The electronic apparatus is not particularly limited in some embodiments of this application and may be any

known electronic apparatus used in the prior art. In some embodiments of this application, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal display television, a portable cleaner, a portable CD player, a mini-disc player, a transceiver, an electronic notebook, a calculator, a storage card, a portable recorder, a radio, a backup power source, a motor, an automobile, a motorcycle, a motor bicycle, a bicycle, a lighting appliance, a toy, a game machine, a clock, an electric tool, a flash lamp, a camera, a large household battery, a lithium-ion capacitor, or the like.

Content disclosed in this application is described in detail in the following examples. These examples are only for illustrative purposes because various modifications and changes made without departing from the scope of the content disclosed in this application are apparent to persons skilled in the art. Unless otherwise stated, all parts, percentages, and ratios reported in the following examples are based on masses, all reagents used in the examples are commercially available or synthesized in a conventional method, and can be used directly without further treatment, and all instruments used in the examples are commercially available.

For ease of description, the secondary battery being a lithium-ion secondary battery is used as an example to detail the secondary battery and its manufacturing method.

**Example 1**

Preparation of positive electrode plate

Lithium cobaltate, bismaleimide oligomer with a molecular weight of about 1000, conductive carbon, and PVDF were dispersed and mixed in N-methylpyrrolidone (NMP) at a mass ratio of 96:1:1:2 to obtain a uniform positive electrode slurry, where the positive electrode slurry had a solid content of 75%.

The positive electrode slurry was applied onto an aluminum foil, followed by drying, cold pressing, cutting, and slitting, to obtain the positive electrode plate, where thickness of the positive electrode film layer was about 100 μm.

Preparation of negative electrode plate

Graphite, the conductive agent carbon black, SBR, and the thickener CMC were dispersed in deionized water at a mass ratio of 97:0.5:1.5:1 to obtain a uniform negative electrode slurry.

The negative electrode slurry was applied onto a copper foil, followed by drying and cold pressing, to obtain the negative electrode plate.

Preparation of separator

A polyethylene film was used as the separator.

Preparation of electrolyte

Under a dry argon environment, DMC and EMC were mixed at a mass ratio of 7:3, $LiPF_6$ with a concentration of 1.3 mol/L was added, and the mixture was mixed well to obtain the electrolyte.

Preparation of lithium-ion secondary battery

The positive electrode plate, separator, and negative electrode plate were sequentially stacked so that the separator was located between the positive electrode plate and the negative electrode plate to provide separation. Then, the resulting stack was wound to form an electrode assembly. The electrode assembly was placed into a shell, the prepared electrolyte was injected into the shell, and after steps such as vacuum packaging, standing, formation, and shaping, a lithium-ion secondary battery was obtained.

**Examples 2 to 5**

The preparation method was similar to the preparation method of Example 1, except for the resistances $R_{before}$ and $R_{after}$ of the positive electrode plate and the adhesion forces F1 and F2 between the positive electrode film layer and the positive electrode current collector. For details, refer to Table 1.

**Comparative Examples 1 and 2**

The preparation method was similar to the preparation method of Example 1, except for the resistances $R_{before}$ and $R_{after}$ of the positive electrode plate and the adhesion forces F1 and F2 between the positive electrode film layer and the positive electrode current collector. For details, refer to Table 1.

**Examples 6 to 14**

The preparation method was similar to the preparation method of Example 2, except for the material of the organic particles. For details, refer to Table 2.

**Examples 15 to 21**

The preparation method was similar to the preparation method of Example 2, except for the mass percentage of the organic particles in the positive electrode film layer. For details, refer to Table 3.

**Examples 22 to 27**

The preparation method was similar to the preparation method of Example 1, except for the thickness D of the positive electrode film layer and the mass percentage of the organic particles in the positive electrode film layer. For details, refer to Table 4.

**Tests**

**(1) Resistance test of positive electrode plate**

Resistance test for the positive electrode plate before heat treatment:

(1) The secondary battery was charged at a constant current of 0.5C to a full-charge voltage, and then charged at a constant full-charge voltage to a current of 0.025C (cut-off current) to make the secondary battery enter a full-charge state.
(2) The secondary battery was disassembled to obtain a positive electrode plate.
(3) The positive electrode plate was placed in an environment with a humidity of 5% to 15%, left standing for 30 min, and then sealed and transferred for the test.
(4) The resistance of the positive electrode plate at 25°C was tested using a BER1200 film resistance tester. At least 15 different points were tested, with adjacent test points spaced at an interval of 2 mm to 3 mm. The resistances of all test points were recorded, and an average value of these test points was calculated and used as a resistance $R_{before}$ of the positive electrode plate before subjected to heat treatment. The test parameters included an indenter area of 153.94 $mm^2$, a pressure of 3.5 tons, and a holding time of 50s.

Resistance test for the positive electrode plate after heat treatment:

(1) The secondary battery was charged at a constant current of 0.5C to a full-charge voltage, and then charged at a constant full-charge voltage to a current of 0.025C (cut-off current) to make the secondary battery enter a full-charge state.
(2) The secondary battery was disassembled to obtain a positive electrode plate.
(3) The positive electrode plate was placed in an oven at 140°C for 60 min, then cooled down to 25°C, and sealed and transferred for the test.
(4) The resistance of the positive electrode plate at 25°C was tested using a BER1200 film resistance tester. At least 15 different points were tested, with adjacent test points spaced at an interval of 2 mm to 3 mm. The resistances of all test points were recorded, and an average value of these test points was calculated and used as a resistance $R_{after}$ of the positive electrode plate after subjected to heat treatment. The test parameters included an indenter area of 153.94 $mm^2$, a pressure of 3.5 tons, and a holding time of 50s.

**(2) Test for thermal abuse pass rate**

The lithium-ion secondary battery under test was charged at a constant current of 0.5C to a full-charge voltage, and then charged at the full-charge voltage to a current of 0.025C (cut-off current) to make the lithium-ion secondary

battery enter a full-charge state. The appearance of the lithium-ion battery before the test was recorded.

The lithium-ion secondary battery was placed in an oven at 25°C, and the oven was heated to 150°C at a temperature rise speed of 5°C/min and then maintained at that temperature for 60 min. The test stopped after the temperature dropped to 50°C. With 10 lithium-ion batteries as one group, the states of the lithium-ion secondary batteries were observed throughout the test. The lithium-ion secondary battery that did not burn or explode was considered passing the test. In other words, thermal abuse pass rate = (number of batteries that did not burn or explode)/10 $\times$ 100%.

**(3) Test for mass percentage of organic particles in positive electrode film layer**

The positive electrode plate was removed from the secondary battery in a dry environment with a humidity of less than 2% at about 25°C. The positive electrode plate was soaked in a solvent to remove the film layer, and the film layer was uniformly dispersed in an NMP solvent through a disperser to obtain a slurry with a solid content of 30%. Then the slurry was centrifuged using a centrifuge to obtain the organic particles in the film layer. Finally, the organic particles were dried at 85°C and weighed to calculate the mass percentage.

**(4) Test for thickness D of positive electrode film layer**

In an environment of about 25°C, the positive electrode plate was removed from the secondary battery, and the residual electrolyte on the surface of the positive electrode plate was wiped off with dust-free paper. Then the positive electrode plate was cut under a plasma to obtain its cross section. The cross section of the positive electrode plate was observed under a SEM, and the thickness of the one-sided positive electrode film layer was tested. At least 15 different points were tested, with adjacent test points spaced at an interval of 2 mm to 3 mm, thicknesses of all the test points were recorded, and the average value of these test points was calculated and used as the thickness D of the positive electrode film layer.

**(5) Test for adhesion forces F1 and F2 between positive electrode current collector and positive electrode film layer**

F1 test:

The part of the electrode plate coated with the positive electrode film layer was made into a strip, and a part of the electrode plate was adhered to the steel plate by double-sided adhesive from one end of the electrode plate along the length direction. Then the steel plate was fixed in the corresponding position of the Gotech tensile machine, and the electrode plate not adhered to the steel plate was pulled up, and the electrode plate was put into the grip directly or through a connector for clamping. When the tensile force at the grip opening was greater than 0 kgf and smaller than 0.02 kgf, the Gotech tensile machine could start testing. The finally measured average tensile force was recorded as the adhesion force F1 between the positive electrode film layer and the positive electrode current collector.

F2 test:

The positive electrode plate was placed in an oven at 140°C for 60 min, and then cooled to 25°C. The part of the electrode plate coated with the positive electrode film layer was made into a strip, and a part of the electrode plate was adhered to the steel plate by double-sided adhesive from one end of the electrode plate along the length direction. Then the steel plate was fixed in the corresponding position of the Gotech tensile machine, and the electrode plate not adhered to the steel plate was pulled up, and the electrode plate was put into the grip directly or through a connector for clamping. When the tensile force at the grip opening was greater than 0 kgf and smaller than 0.02 kgf, the Gotech tensile machine could start testing. The finally measured average tensile force was recorded as the adhesion force F2 between the positive electrode film layer and the positive electrode current collector.

**(6) Test for capacity retention rate**

Under an environment of (25$\pm$3)°C, the battery was charged at a current of 0.5C to a voltage of 4.5 V, charged at a constant voltage of 4.5 V to a current of 0.025C, and then fully discharged at a current of 0.2C and 2C, respectively, to obtain a discharge capacity of 0.2C and 2C, respectively. A discharge rate of 2C was obtained according to 2C discharge capacity/0.2C discharge capacity.

Table 1 lists test results of the resistances $R_{before}$ and $R_{after}$ of the positive electrode plate and the adhesion forces F1 and F2 between the positive electrode film layer and the positive electrode current collector in Examples 1 to 5 and Comparative Examples 1 and 2.

**Table 1**

| No. | Positive electrode plate | | | | | | | | Thermal abuse pass rate | Capacity retention rate |
|---|---|---|---|---|---|---|---|---|---|---|
| | m | Content of conductive agent | $R_{before}$ (Ω) | $R_{after}$ (Ω) | $R_{after}$ - $R_{before}$ | F1 (N/m) | F2 (N/m) | F2/F1 | | |
| Example 1 | 1.0% | 2.0% | 1.0 | 2.1 | 1.1 | 12.1 | 18.2 | 1.5 | 100% | 96.3% |
| Example 2 | 1.0% | 1.5% | 1.5 | 2.8 | 1.3 | 12.7 | 19.1 | 1.5 | 100% | 95.1% |
| Example 3 | 1.0% | 1.0% | 2.0 | 3.4 | 1.4 | 13.0 | 20.2 | 1.6 | 100% | 95.0% |
| Example 4 | 1.0% | 0.8% | 2.5 | 3.9 | 1.4 | 13.3 | 19.3 | 1.5 | 100% | 91.8% |
| Example 5 | 1.0% | 0.5% | 3.0 | 4.8 | 1.8 | 14.0 | 22.4 | 1.6 | 100% | 90.1% |
| Comparative Example 1 | 1.0% | 2.5% | 0.4 | 1.2 | 0.8 | 12.7 | 19.1 | 1.5 | 30% | 95.4% |
| Comparative Example 2 | / | 1.5% | 1.2 | 2.3 | 1.1 | 10.3 | 9.3 | 0.9 | 0 | 95.7% |

Through comparison of the test results of Examples 1 to 5 with those of Comparative Examples 1 and 2 in Table 1, it can be learned that in the secondary battery of this application, the positive electrode film layer includes organic particles configured to undergo a thermal polymerization reaction under heat treatment conditions, which can enhance the structural stability of the positive electrode active material, making it less susceptible to phase change at high temperatures, and can also increase the resistance of the positive electrode plate at high temperatures. In addition, the thermal polymerization reaction of the organic particles contributes to improving the adhesion force between the positive electrode film layer and the positive electrode current collector. When F1 and F2 satisfy the above relationship, the risk of the positive electrode film layer falling off from the positive electrode current collector at high temperatures can be reduced. Therefore, the positive electrode film layer including organic particles configured to undergo the thermal polymerization reaction under the heat treatment condition can improve the safety performance of the secondary battery. Furthermore, the resistance $R_{before}$ of the positive electrode plate before heat treatment is 1 Ω to 3 Ω, and the organic particles after heat treatment can make $R_{after}$ and $R_{before}$ satisfy the following relationship: $R_{after} - R_{before} \geq 1\ \Omega$. Thus, the risk of thermal runaway of the secondary battery is reduced at high temperatures, and the secondary battery still has a good cycling performance at high temperatures.

Table 2 lists the materials of the organic particles in the positive electrode film layers of Examples 6 to 14 and the test results.

**Table 2**

| No. | Positive electrode plate | | | | | | | | | | | Thermal abuse pass rate | Capacity retention rate |
|---|---|---|---|---|---|---|---|---|---|---|---|---|---|
| | Organic particle | | | | | $R_{before}$ (Ω) | $R_{after}$ (Ω) | $R_{after}$ - $R_{before}$ | F1 (N/m) | F2 (N/m) | F2/F1 | | |
| | Material | Monomer | R1 | R2 | R3 | | | | | | | | |
| Example 2 | Bismaleimide oligomer | Bismaleimide | Amino | / | C6 cycloalkylene group | 1.5 | 2.8 | 1.3 | 12.7 | 19.1 | 1.5 | 100% | 95.1% |
| Example 6 | Bismaleimide oligomer | Bismaleimide | Amino | / | C5 cycloalkylene group | 1.4 | 2.9 | 1.5 | 12.5 | 18.3 | 1.5 | 90% | 94.7% |
| Example 7 | Bismaleimide oligomer | Bismaleimide | Hydrogen | / | C6 cycloalkylene group | 1.5 | 2.6 | 1.1 | 11.8 | 17.9 | 1.5 | 80% | 95.2% |
| Example 8 | Bismaleimide oligomer | Bismaleimide | Hydrogen | / | Fluorine substituted C6 cycloalkylene group | 1.5 | 2.7 | 1.2 | 12.0 | 18.0 | 1.5 | 100% | 95.3% |
| Example 9 | Maleimide | Maleimide | / | Oxygen | / | 1.3 | 2.5 | 1.2 | 12.1 | 18.0 | 1.5 | 80% | 93.8% |
| Example 10 | Maleimide | Maleimide | / | imino group | / | 1.6 | 2.9 | 1.3 | 12.8 | 19.8 | 1.5 | 100% | 93.6% |
| Example 11 | Maleimide | Maleimide | / | phosphinidenegroup | / | 1.8 | 3.0 | 1.2 | 12.5 | 18.5 | 1.5 | 100% | 93.5% |
| Example 12 | Polypyrrole | Pyrrole | Hydrogen | / | / | 2.0 | 3.8 | 1.8 | 14.5 | 18.1 | 1.2 | 100% | 92.1% |
| Example 13 | Polypyrrole | Pyrrole | Amino | / | / | 2.3 | 4.0 | 1.7 | 16.0 | 21.5 | 1.3 | 100% | 91.8% |
| Example 14 | Polypyrrole | Pyrrole | Sodium ion | / | / | 1.9 | 3.7 | 1.8 | 14.3 | 18.6 | 1.3 | 100% | 91.5% |

As can be known from Table 2, when the resistance $R_{before}$ of the positive electrode plate before heat treatment is in the range of 1 Ω to 3 Ω, the organic particles including the above thermally polymerizable monomers make $R_{after}$ and $R_{before}$ satisfy the following relationship: $R_{after} - R_{before} \geq 1$ Ω. This can improve the safety performance of the secondary battery while allowing the secondary battery to have a good cycling performance.

Table 3 lists the mass percentage of the organic particles in the positive electrode film layer and the test results in Examples 15 to 21.

**Table 3**

| No. | Positive electrode plate | | | | | | | | Thermal abuse pass rate | Capacity retention rate |
|---|---|---|---|---|---|---|---|---|---|---|
| | m | Content of conductive agent | Rbefore (Ω) | Rafter (Ω) | $R_{after}$ - $R_{before}$ | F1 (N/m) | F2 (N/m) | F2/F1 | | |
| Example 2 | 1.0% | 1.5% | 1.5 | 2.8 | 1.3 | 12.7 | 19.1 | 1.5 | 100% | 95.1% |
| Example 3 | 1.0% | 1.0% | 2.0 | 3.4 | 1.4 | 13.0 | 20.2 | 1.6 | 100% | 95.0% |
| Example 5 | 1.0% | 0.5% | 3.0 | 4.8 | 1.8 | 14.0 | 22.4 | 1.6 | 100% | 90.1% |
| Example 15 | 0.2% | 1.5% | 1.3 | 2.5 | 1.2 | 10.5 | 11.6 | 1.1 | 50% | 95.5% |
| Example 16 | 2.2% | 1.5% | 3.4 | 5.2 | 1.8 | 14.5 | 30.8 | 2.1 | 100% | 86.2% |
| Example 17 | 0.3% | 1.5% | 1.3 | 2.5 | 1.2 | 12.5 | 15.0 | 1.2 | 80% | 95.4% |
| Example 18 | 0.5% | 1.5% | 1.3 | 2.6 | 1.3 | 12.7 | 15.9 | 1.3 | 100% | 95.5% |
| Example 19 | 0.8% | 1.5% | 1.4 | 2.5 | 1.1 | 12.8 | 17.9 | 1.4 | 100% | 95.1% |
| Example 20 | 1.5% | 1.5% | 1.9 | 3.3 | 1.4 | 13.1 | 18.8 | 1.4 | 100% | 93.3% |
| Example 21 | 2.0% | 1.5% | 2.0 | 3.6 | 1.6 | 13.7 | 20.6 | 1.5 | 100% | 90.6% |

Through comparison of the test results of Examples 15 to 21 in Table 3, it can be learned that when the mass percentage of the organic particles in the positive electrode film layer is in the range of 0.3% to 2%, the safety performance of the secondary battery can be further improved, and the secondary battery can have a good cycling performance.

Through comparison of the test results of Examples 2, 3, 5, and 15 to 21 in Table 3, it can be learned on the basis of $R_{before}$ being 1 Ω to 3 Ω and $R_{after} - R_{before} \geq 1$ Ω, $1.2 \leq F2/F1 \leq 1.6$ can further improve the safety performance of the secondary battery while allowing for a good cycling performance.

Table 4 lists the thickness D and m of the positive electrode film layers and the test results in Examples 22 to 27.

**Table 4**

| No. | Positive electrode plate | | | | | | | | Thermal abuse pass rate | Capacity retention rate |
|---|---|---|---|---|---|---|---|---|---|---|
| | m | D | $R_{before}$ (Ω) | $R_{after}$ (Ω) | $R_{after}$ - $R_{before}$ | F1 (N/m) | F2 (N/m) | F2/F1 | | |
| Example 22 | 1.6% | 30μm | 1.6 | 2.6 | 1.0 | 12.6 | 21.4 | 1.7 | 80% | 95.6% |
| Example 23 | 1.3% | 90μm | 1.7 | 2.8 | 1.1 | 10.7 | 17.6 | 1.6 | 90% | 95.3% |

(continued)

| No. | Positive electrode plate | | | | | | | | Thermal abuse pass rate | Capacity retention rate |
|---|---|---|---|---|---|---|---|---|---|---|
| | m | D | $R_{before}$ (Ω) | $R_{after}$ (Ω) | $R_{after}$ - $R_{before}$ | F1 (N/m) | F2 (N/m) | F2/F1 | | |
| Example 24 | 1.0% | 120μm | 1.8 | 2.9 | 1.1 | 11.5 | 18.4 | 1.6 | 100% | 95.4% |
| Example 25 | 0.3% | 200μm | 1.8 | 3.0 | 1.2 | 10.5 | 16.3 | 1.6 | 100% | 94.5% |
| Example 26 | 2.0% | 25μm | 1.1 | 1.8 | 0.7 | 34.0 | 51.0 | 1.5 | 40% | 97.3% |
| Example 27 | 0.5% | 210μm | 3.5 | 5.5 | 2.0 | 4.3 | 4.7 | 1.1 | 100% | 83.8% |

Through comparison of the test results of Examples 22 to 27 in Table 4, it can be learned that when 30 μm ≤ D ≤ 100 μm, 1% ≤ m ≤ 2%, which can help $R_{after}$ and $R_{before}$ satisfy $R_{after}$ - $R_{before}$ ≥ 1 Ω. This improves the safety performance of the secondary battery, and also allows the secondary battery to have a good cycling performance. When 100 μm < D ≤ 200 μm, 0.3% ≤ m ≤ 1%, which can also help $R_{after}$ and $R_{before}$ satisfy $R_{after}$ - $R_{before}$ ≥ 1 Ω. This improves the safety performance of the secondary battery, and also allows the secondary battery to have a good cycling performance.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in some embodiments or make equivalent replacements to some or all technical features thereof without departing from the scope of the technical solutions of some embodiments of this application. All such modifications and equivalent replacements shall fall within the scope of claims and specification of this application. In particular, as long as there is no structural conflict, the various technical features mentioned in some embodiments can be combined in any manner. This application is not limited to the specific embodiments disclosed in this specification but includes all technical solutions falling within the scope of the claims.

## Claims

**1.** A secondary battery, comprising a positive electrode plate, wherein the positive electrode plate comprises a positive electrode current collector and a positive electrode film layer, wherein the positive electrode film layer is disposed on at least one side of the positive electrode current collector, and the positive electrode film layer comprises a positive electrode active material and organic particles provided on a surface of the positive electrode active material, the organic particles being configured to undergo a thermal polymerization reaction under a heat treatment condition to form an insulating layer covering at least a portion of the surface of the positive electrode active material;

Before the heat treatment, an adhesion force between the positive electrode current collector and the positive electrode film layer is F1 N/m; and after the heat treatment, an adhesion force between the positive electrode current collector and the positive electrode film layer is F2 N/m; wherein 1 ≤ F2/F1 ≤ 2; and
a resistance of the positive electrode plate before the heat treatment is $R_{before}$, wherein $R_{before}$ is 1 Ω to 3 Ω; a resistance of the positive electrode plate after the heat treatment is $R_{after}$; and $R_{after}$ - $R_{before}$ ≥ 1 Ω;
wherein the resistance of the positive electrode plate is obtained by testing at room temperature with a test area of 153.94 $mm^2$, a pressure of 3.5 tons, and a holding time of 50s.

**2.** The secondary battery according to claim 1, wherein 1.2 ≤ F2/F1 ≤ 1.6.

**3.** The secondary battery according to claim 1, wherein F1 is 10 to 30.

**4.** The secondary battery according to claim 1, wherein $R_{after}$ ≥ 2.1 Ω.

**5.** The secondary battery according to claim 1, wherein the organic particles comprise at least one monomer of formula I, formula II, or formula III;

and/or contain an oligomer formed from at least one monomer of formula I, formula II, or formula III; wherein formula I, formula II, and formula III are structured as follows:

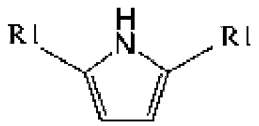

formula I

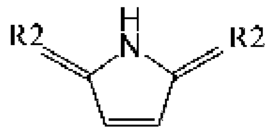

formula II

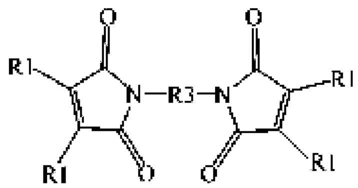

formula III

wherein R1 comprises one or more of hydrogen, methyl, ethyl, amino, hydroxyl, and metal ion;
R2 comprises one or more of imino group and phosphinidenegroup; and
R3 comprises a C5-C6 cycloalkylene group, and/or a C5-C6 cycloalkylene group substituted with one or more of fluorine, chlorine, bromine, nitrogen, and phosphorus.

**6.** The secondary battery according to claim 5, wherein the monomer comprises one or more of maleimide, bismaleimide, pyrrole, and 2,5-dimethylpyrrole;

and/or the oligomer has a number average molecular weight of less than or equal to 2000;
and/or the oligomer comprises at least one of maleimide oligomer or bismaleimide oligomer.

**7.** The secondary battery according to claim 1, wherein m is a mass percentage of the organic particles in the positive electrode film layer, m ranges from 0.3% to 2%.

**8.** The secondary battery according to claim 1, wherein D is a thickness of the positive electrode film layer and m is a mass percentage of the organic particles in the positive electrode film layer, D and m satisfy at least one of the following characteristics:

$$\text{(I) } 30\ \mu m \le D \le 100\ \mu m, \text{ and} 1\% \le m \le 2\%;$$

or

$$\text{(II) } 100\ \mu m < D \le 200\ \mu m, \text{ and} 0.3\% \le m \le 1\%.$$

**9.** The secondary battery according to any one of claims 1 to 8, wherein the heat treatment is to leave the positive electrode plate at a temperature of 120°C to 140°C for 60 min.

**10.** An electronic apparatus, comprising the secondary battery according to any one of claims 1 to 9.

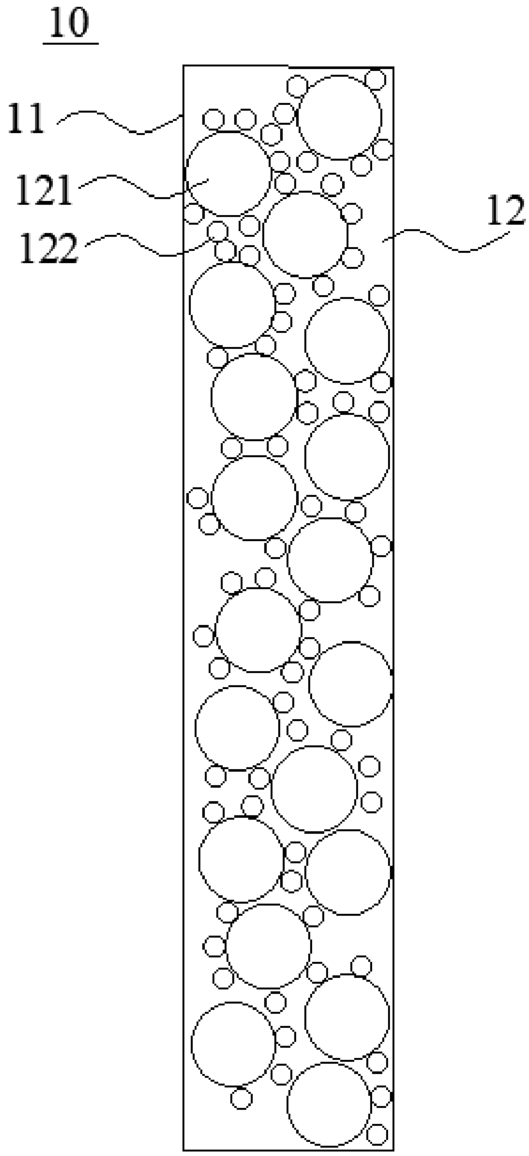


FIG. 1

## INTERNATIONAL SEARCH REPORT

International application No.
**PCT/CN2023/139532**

**A. CLASSIFICATION OF SUBJECT MATTER**

H01M4/62(2006.01)i； H01M4/13(2010.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; DWPI; VEN; ENTXT; CNKI: 正极, 阴极, 聚合, 马来酰亚胺, 吡咯, 粘结力, 电阻, 热失控, 安全, positive electrode, cathode, polymerize, maleimide, pyrrole, binding power, resistance, thermal runaway, safety

**C. DOCUMENTS CONSIDERED TO BE RELEVANT**

| Category* | Citation of document, with indication, where appropriate, of the relevant passages | Relevant to claim No. |
|---|---|---|
| PX | CN 115986056 A (NINGDE AMPEREX TECHNOLOGY LTD.) 18 April 2023 (2023-04-18)<br>description, paragraphs 3-88 | 1-10 |
| A | CN 101447561 A (SAMSUNG SDI CO., LTD.) 03 June 2009 (2009-06-03)<br>description, page 1, paragraph 2-page 31, paragraph 7 | 1-10 |
| A | 刘耀南 等 (LIU, Yaonan et al.). "电气绝缘测试技术 (Non-official translation: Electrical Insulation Testing Technology)"<br>*Beijing: China Machine Press, first edition in August 1981, seventh printing in June 1988, ISBN: 7-111-00317-9*, 30 June 1988 (1988-06-30),<br>page 8, paragraph 5-page 9, paragraph 1 | 1-10 |
| A | CN 108336356 A (GUANGZHOU GREAT POWER ENERGY & TECHNOLOGY CO., LTD.) 27 July 2018 (2018-07-27)<br>entire document | 1-10 |
| A | CN 108172772 A (TOYOTA MOTOR CORP.) 15 June 2018 (2018-06-15)<br>entire document | 1-10 |
| A | KR 20200026629 A (LG CHEMICAL LTD.) 11 March 2020 (2020-03-11)<br>entire document | 1-10 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **04 March 2024** | **09 March 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2023/139532**

| Patent document cited in search report | | | Publication date (day/month/year) | Patent family member(s) | | | Publication date (day/month/year) |
|---|---|---|---|---|---|---|---|
| CN | 115986056 | A | 18 April 2023 | CN | 115986056 | B | 13 June 2023 |
| CN | 101447561 | A | 03 June 2009 | KR | 20090055307 | A | 02 June 2009 |
| | | | | KR | 101041126 | B1 | 13 June 2011 |
| | | | | US | 2009136845 | A1 | 28 May 2009 |
| | | | | EP | 2071651 | A1 | 17 June 2009 |
| | | | | JP | 2009135103 | A | 18 June 2009 |
| | | | | KR | 20090110133 | A | 21 October 2009 |
| | | | | US | 7931984 | B2 | 26 April 2011 |
| | | | | CN | 101447561 | B | 17 August 2011 |
| | | | | JP | 5198231 | B2 | 15 May 2013 |
| | | | | EP | 2071651 | B1 | 01 November 2017 |
| CN | 108336356 | A | 27 July 2018 | | None | | |
| CN | 108172772 | A | 15 June 2018 | JP | 2018092871 | A | 14 June 2018 |
| | | | | JP | 6519575 | B2 | 29 May 2019 |
| | | | | US | 2018159109 | A1 | 07 June 2018 |
| | | | | US | 10297814 | B2 | 21 May 2019 |
| | | | | CN | 108172772 | B | 27 October 2020 |
| KR | 20200026629 | A | 11 March 2020 | | None | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202310258701